(19) Europäisches Patentamt
European Patent Office
Office européen des brevets

(11) **EP 1 927 526 B1**

(12) **EUROPEAN PATENT SPECIFICATION**

(45) Date of publication and mention
of the grant of the patent:
**12.08.2009 Bulletin 2009/33**

(51) Int Cl.:
***B62D 1/181*** *(2006.01)*   ***B62D 1/185*** *(2006.01)*
***B62D 1/187*** *(2006.01)*   ***H02P 21/14*** *(2006.01)*

(21) Application number: **07023078.4**

(22) Date of filing: **28.11.2007**

(54) **Electric steering apparatus**

Elektrische Lenkvorrichtung

Appareil à direction électrique

(84) Designated Contracting States:
**DE FR**

(30) Priority: **30.11.2006 JP 2006324374**

(43) Date of publication of application:
**04.06.2008 Bulletin 2008/23**

(73) Proprietor: **NSK Ltd.**
**Tokyo 141-8560 (JP)**

(72) Inventors:
• **Endo, Shuji**
**Maebashi-shi**
**Gunma 371-8527 (JP)**

• **Kawaguchi, Manabu**
**Maebashi-shi**
**Gunma 371-8527 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**JP-A- 11 070 880**      **JP-A- 2000 289 626**
**JP-A- 2005 153 879**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 1 927 526 B1**

**Description**

BACKGROUND OF THE INVENTION

1. Field of the Invention

The present invention relates to an electric steering apparatus in which at least either of a tile position and a telescopic position of a steering mechanism is adjusted by using an electric motor.

2. Description of Related Art

A steering wheel position adjustment control apparatus is known as an on-board electric control apparatus which includes a steering wheel position adjusting mechanism for adjusting the position of a steering wheel, a motor for driving the steering wheel position adjusting mechanism, a rotation sensor for detecting the rotation of the motor and a control unit for controlling duty ratio of the motor based on a deviation between a target control speed which linearly accelerates or decelerates during a preset acceleration or deceleration and an actual speed when the steering wheel position adjusting mechanism is in operation, wherein the motor is made to be driven by an field-effect transistor (FET) (for example, refer to Japanese Patent Unexamined Publication No. JP-A-11-70880).

In addition, a steering wheel position adjustment control apparatus is also known in which duty ratio of a motor is controlled to obtain a target speed V0 by an FET. In this steering wheel position adjustment control apparatus, a learning control is implemented in which an actual speed Vm of the motor is detected at time intervals of a pulse signal which is generated by a rotation speed sensor every predetermined rotation angle, a control unit holds a duty value to an initial duty value DTs which is preset during an actual initial duty holding time Tr which is spent from an operation is started until the rotation sensor generates two pulses, and in the event that the operation is started at a preset ideal speed, an ideal initial duty holding time Ti which is spent from the operation is started until the rotation speed sensor generates two pulses is compared with the actual initial duty holding time Tr so as to correct an initial duty value DTs when the next operation is started (for example, refer to Japanese Patent Unexamined Publication No. JP-A-2000-289626).

In the conventional examples described in the JP-A-11-70880 and JP-A-2000-289626, since the rotation sensor for detecting the rotation of the motor is provided, an actual speed of the motor is detected based on a pulse signal detected by the rotation sensor. A deviation between the actual speed so detected and a target speed is calculated by feeding back the actual speed so detected, so as to control the motor based on the deviation so calculated. In order to suppress the intrinsic load of the posture adjusting mechanism and the speed variation due to disturbance, a rotation sensor of high accuracy is applied. Accordingly, a processor becomes necessary which enables a high-speed operation which corresponds to the application of such a rotation sensor, leading to an unsolved problem that the production costs are increased.

SUMMARY OF THE INVENTION

Then, the invention has been made with a view to coping with the unsolved problem that the conventional examples had to face, and an object thereof is to provide an electric steering apparatus which can output accurately a target speed based on at least either of a tilt action and a telescopic action of a steering wheel without being affected by the intrinsic load of a posture adjusting mechanism or load variation due to disturbance even in the event that a highly accurate rotation detecting device and a high speed processor are not provided.

With a view to attaining the problem, according to a first aspect of the invention, there is provided an electric steering apparatus including:

a steering mechanism including a steering wheel;
a posture adjusting mechanism having an electric motor for adjusting at least either of a tilt position and a telescopic position of the steering mechanism;
a speed command unit which outputs a speed command for position adjustment by the posture adjusting mechanism;
a motor control unit having a feed-forward control module in which a transfer function for obtaining a target speed based on the speed command outputted from the speed command unit is set for controlling the electric motor; and
a disturbance load estimation unit which estimates a disturbance load from a deviation between a load torque based on speed information of the electric motor and a command torque based on the speed command when the electric motor is controlled by the motor control unit, wherein
a command value equivalent to a disturbance load estimation value estimated by the disturbance load estimation unit is positively fed back to an output side of the feed-forward control module, and

the transfer function of the feed-forward control module is set to a transfer function with which a target speed is obtained.

In addition, preferably, the disturbance load estimation unit is made up of an disturbance observer including:

a command torque calculation module which calculates a command torque by multiplying a command value outputted from the feed-forward control module by a torque constant;
a load torque calculation module which calculates the load torque by multiplying a speed of the electric motor by a motor inverse transfer function; and
a disturbance estimation module which estimates the disturbance load by calculating a deviation between the command torque outputted from the command torque calculation module and the load torque calculated by the load torque calculation module.

More preferably, when outputting an acceleration or deceleration speed command, the speed command unit is made to calculate the speed command by multiplying a predetermined constant speed command value by a trigonometric function which takes an acceleration or deceleration time into consideration.

According to the invention, when the electric motor is driven by the motor control unit, the disturbance load is estimated by the disturbance load estimation unit based on the load torque which includes the load torque intrinsic to the posture adjusting mechanism and the load torque due to disturbance and the command torque based on the speed command, so that the command value equivalent to the disturbance load estimation value is positively fed back to the output side of the feed-forward control module and the feed-forward control module is set to the transfer function with which the target speed can be obtained. Accordingly, there can be provided an advantage that even in the event that an inexpensive motor rotation detection unit and a relatively low-speed processor are employed, a smooth motor drive can be realized without being affected by a variation in load torque.

As this occurs, by calculating the target speed by multiplying the predetermined constant speed command value by the trigonometric function which takes the acceleration or deceleration time into consideration when outputting an acceleration or deceleration speed command, the acceleration or deceleration of the motor can be implemented more smoothly.

BRIEF DESCRIPTION OF THE DRAWINGS

Fig. 1 is a schematic configuration diagram showing an embodiment of the invention;
Fig. 2 is a block diagram showing a control circuit which can be applied to the invention;
Fig. 3 is a block diagram showing a specific configuration of a motor drive circuit in Fig. 2;
Fig. 4 is an explanatory diagram showing a control range of a tilt mechanism;
Fig. 5 is an explanatory diagram showing a control range of a telescopic mechanism;
Fig. 6 is a flowchart showing an example of a motor control operation procedure which is executed in a central processor unit shown in Fig. 2;
Fig. 7 is a block diagram showing motor drive operations which are executed in the central processor unit shown in Fig. 2; and
Fig. 8 is an explanatory diagram showing a target speed command value.

DETAILED DESCRIPTION OF THE PREFERED EMBODIMENTS

Hereinafter, an embodiment of the invention will be described based on the drawings.

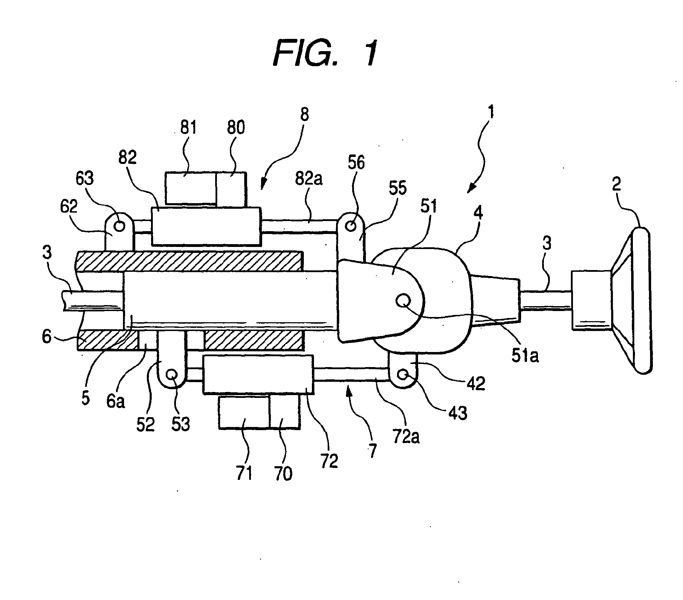

Fig. 1 is a schematic configuration diagram of an electric steering apparatus which shows an embodiment of the invention. This electric steering apparatus adopts a so-called neck-swing type tilting mode and includes three steering columns, that is, an upper column 4, a middle column 5 and a lower column 6 which holds a steering shaft 3 which extends from a steering wheel 2 to be coupled to a steering gear (not shown) in such a manner as to rotate around an axis thereof, whereby the steering shaft 3 and hence the steering wheel 2 is held in a desired position by adjusting appropriately relative positions of the respective columns 4, 5, 6.

The upper column 4 accommodates a universal joint (not shown) for the steering shaft 3 in an interior space thereof. The upper column 4 is attached to a fork portion 51 that is formed at a rear end of the middle column 5 via a tilt hinge pin 51a in such a manner as to tilt. Namely, the tilt position of the steering wheel 2 can be adjusted by appropriately tilting the upper column 4 about a tilt hinge pin 51a as a fulcrum.

The middle column 5 is fitted and held in the lower column 6 and is enabled to slide together with the fork portion 51 which supports the upper column 4 in an axial direction thereof. Namely, the upper column 4 moves in the axial direction together with the steering shaft 3, so as to adjust the telescopic position of the steering wheel 2 by causing the middle column 5 to move back and forth as required relative to the lower column 6 which is fixed to a vehicle body.

The tilt position of the upper column 4 is adjusted by an electric tilt mechanism 7. This electric tilt mechanism 7 includes, for example, a three-phase brushless motor 71 to which a gearbox 70 is additionally attached and an extendable rod module 72 which is driven by the brushless motor 71.

An actuator rod 72a which extends from the extendable rod module 72 is made to extend and contract in response to rotations of the brushless motor 71.

A front end portion of the extendable rod module 72 is pivotally attached via a pin 53 to a bracket 52 which is fixed to the middle column 5 and hence makes up a hinge. A rear end portion of the actuator rod 72a is pivotally attached via a pin 43 to a bracket 42 which is foxed to the upper column 4 and makes up a hinge. Consequently, in the event that the actuator rod 72 is gradually fed out from the extendable rod module 72, the upper column 4 is caused to smoothly rotate in a counterclockwise direction relative to the middle column 5. Accordingly, the steering wheel 2 can gradually be inclined upwards. On the other hand, in the event that the actuator rod 72a is caused to be retracted back into the extendable rod module 72, the upper column 4 is caused to smoothly rotate in a clockwise direction relative to the middle column 5, whereby the steering wheel 2 can gradually be inclined downwards.

The telescopic position of the upper column 4 is adjusted by an electric telescopic mechanism 8 which has substantially the same construction as that of the electric tilt actuator 71. Namely, this electric telescopic mechanism 8 includes, for example, a three-phase brushless motor 81 to which a gearbox 80 is additionally attached and an extendable rod module 82 which is driven by the brushless motor 81.

A front end portion of the extendable rod module 82 is pivotally attached via a pin 63 to a bracket 62 which is fixed to the lower column 6 and makes up a hinge. A rear end portion of the actuator rod 82 is pivotally attached via a pin 56 to a bracket 55 which is fixed to the fork portion 51 of the middle column 5.

Consequently, in the event that the actuator rod 82a is fed out from the extendable rod module 82, the middle column is caused to be fed out from the lower column 6, whereby the steering wheel 2 can be made to move backwards. On the other hand, in the event that the actuator rod 82 is made to be retracted back into the extendable rod module 82, the middle column 5 is caused to be fed into the lower column 6, whereby the steering wheel 2 can be made to move forwards.

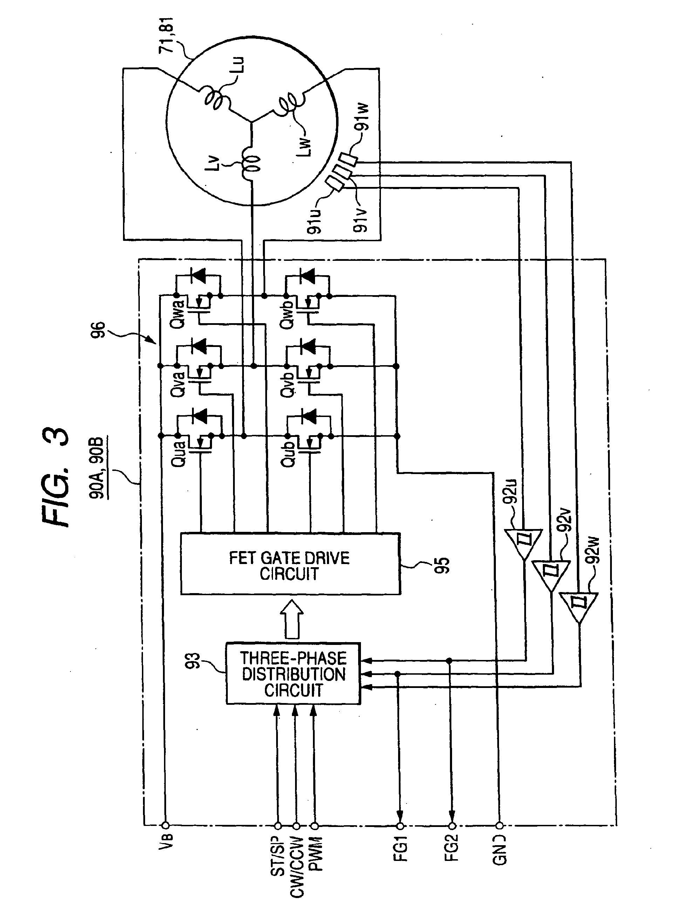

In addition, the bracket 52 which is fixed to the middle column 5 is enabled to be guided by a groove formed in the lower column 6 so as to slide together with the middle column 5 along the axial direction relative to the lower column 6. Here, the brushless motors 71 and 81 incorporate therein motor drive circuits 90A and 90B, respectively. As is shown in Fig. 3, inputted into these motor drive circuits 90A and 90B are:

signals ST/SP which are inputted from a controller 100 and represent start and stop (details will be described later) ; rotational direction signals CW/CCW which indicate rotational directions; a pulse width modulation signal PWM which represents a speed command; and rotational position signals which are inputted from Schmidt trigger circuits 92u to 92w which convert outputs of position detection elements 91u to 91w which are made up of Hall elements of the brushless motors 71 and 81 into binary signals.

This motor drive circuits 90A and 90B each include:

a three-phase distribution circuit 93 for forming a three-phase drive signal for driving the brushless motors 71 and 81 based on those inputs;
a FET gate drive circuit 95 into which a three-phase drive signal that is outputted from the three-phase distribution circuit 93 is inputted so as to drive gates of field effect transistors (FET) Qua to Qwb which make up an inverter circuit 96; and
the inverter circuit 96 in which three FET circuits which correspond to coils Lu, Lv and Lw of the respective phases of the brushless motors 71 and 81 are connected in parallel by connecting in series the pairs of field effect transistors Qua, Qub, Qva, Qvb and Qwa, Qwb.

Here, the FET gate drive circuit 95 supplies pulse width modulation signals PWM to the gates of the respective field effect transistors Qua to Qwb of the inverter circuit 96 so as to drive the brushless motors 71 and 81 in a rotational direction and at a rotational speed which correspond to a three-phase drive signal inputted from the three-phase distribution circuit 93.

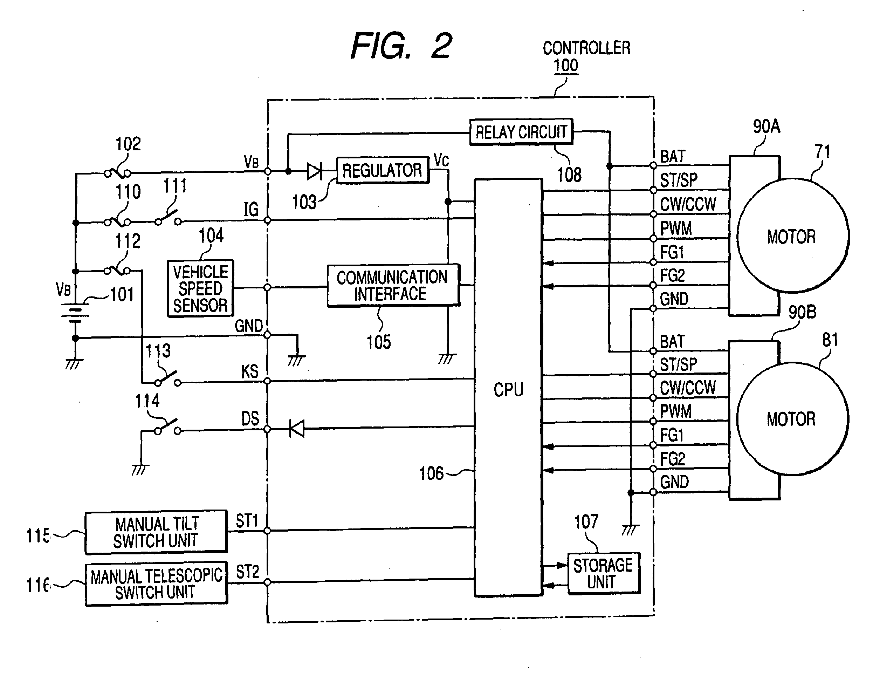

In addition, the motor drive circuits 90A and 90B are driven and controlled by the controller 100. As is shown in Fig. 2, this controller 100 includes:

a regulator 103 into which a battery voltage $V_B$ is inputted from a battery 101 installed on the vehicle via a fuse 102; a communication interface 105 which obtains a vehicle speed detection value detected by a vehicle speed sensor 104 as a running condition detection unit installed on the vehicle from another control system via a communication line; a central processor unit (CPU) 106 which is operated by a control voltage $V_C$ outputted from the regulator 103; a storage unit 107 which is made up of a non-volatile memory which is connected to the central processor unit 106; and a relay circuit 108 as a switching unit which is interposed between the fuse 102 and battery voltage input ends of the motor drive circuits 90A and 90B within the controller 100.

The battery voltage $V_B$ is inputted directly into the central processor unit 106, and the control voltage $V_C$ of the regulator 103 is also inputted in the central processor unit 106. Furthermore, also inputted into the central processor unit 106 are an ignition signal IG which is outputted from an ignition switch 111 which is connected to the battery 101 via a fuse 110, a key switch signal KS which is outputted from a key switch 113 which is connected to the battery 101 via fuse 112, a door signal DS of a door switch 114 which indicates open and closed states of doors which open and close doorways into and from the passenger compartment, switch signals ST1 and ST2 of a manual tilt switch unit 115 which indicates an inclination angle of the electric tilt mechanism 7 and a telescopic switch unit 116 which indicates an extension or contraction position of the electric telescopic mechanism 8 and position detection signals FG12 and FG2 which are outputted from the motor drive circuits 90A and 90B with a phase difference of 120 degrees provided therebetween.

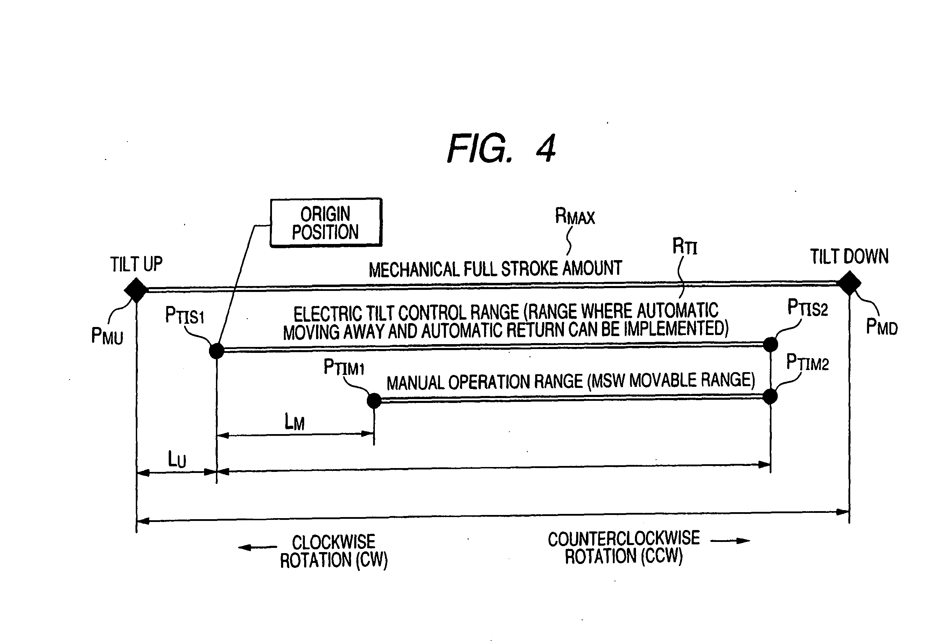

Here, an electric tilt control range by the electric tilt mechanism 7 is set as is shown in Fig. 4 such that a position lying a predetermined distance $L_U$ inwards from a mechanical stopper position $P_{MD}$ relative to a maximum shift range $R_{MAX}$ of the tilt mechanism which is determined by a withdrawal side or tilt-up side mechanical stopper position $P_{MU}$ and a tilt-down side mechanical stopper position $P_{MD}$ is set as an upper-side control start position $P_{TIS1}$ of an electric tilt control range $R_{T1}$. This position is stored in an electric tilt control range storage domain of the storage unit 107, which will be described later, while a position lying an opposite end of the electric tilt control range $R_{T1}$ to the upper-side control start position $P_{TIS1}$ is set as a down side control start position $P_{TIS2}$. Further, this position is also stored in the electric tilt control range storage domain of the storage unit 107 similarly.

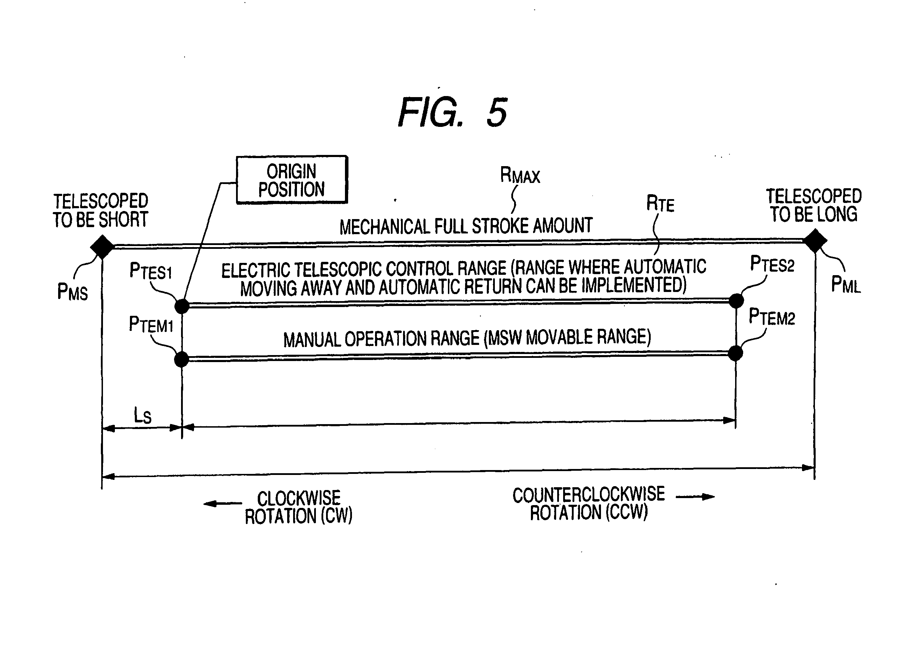

In addition, a manual tilt operation range which can be set by operating the manual tilt switch unit 115 is restricted by an upper side operation start position $P_{TIM1}$ lying by a predetermined distance $L_M$ in a down direction from the upper side control start portion $P_{TIS1}$ of the electric tilt control range $R_{T1}$ and a lower side operation start position $P_{TIM2}$ which lies to correspond to the lower side operation start position $P_{TIS2}$ of the electric tilt control range.
Additionally, an electric telescopic control range by the electric telescopic mechanism 8 is set as is shown in Fig. 5 such that a position lying a predetermined distance $L_S$ inwards from a mechanical stopper position $P_{MU}$ relative to a maximum shift range $R_{MAX}$ of the telescopic mechanism which is determined by a withdrawal side or contacted side mechanical stopper position $P_{MS}$ and an extension side mechanical stopper position $P_{ML}$ is set as an extension side control start position $P_{TES1}$ of an electric telescopic control range $R_{TE}$. This position is stored in an electric telescopic control range storage domain of the storage unit 107, while a position lying at an opposite end of the electric telescopic control range $R_{TE}$ to the contraction side control start position $P_{TES2}$ is set as an extension side control start position $P_{TES2}$ This position is also stored in the electric tilt control range storage domain of the storage unit 107 similarly.

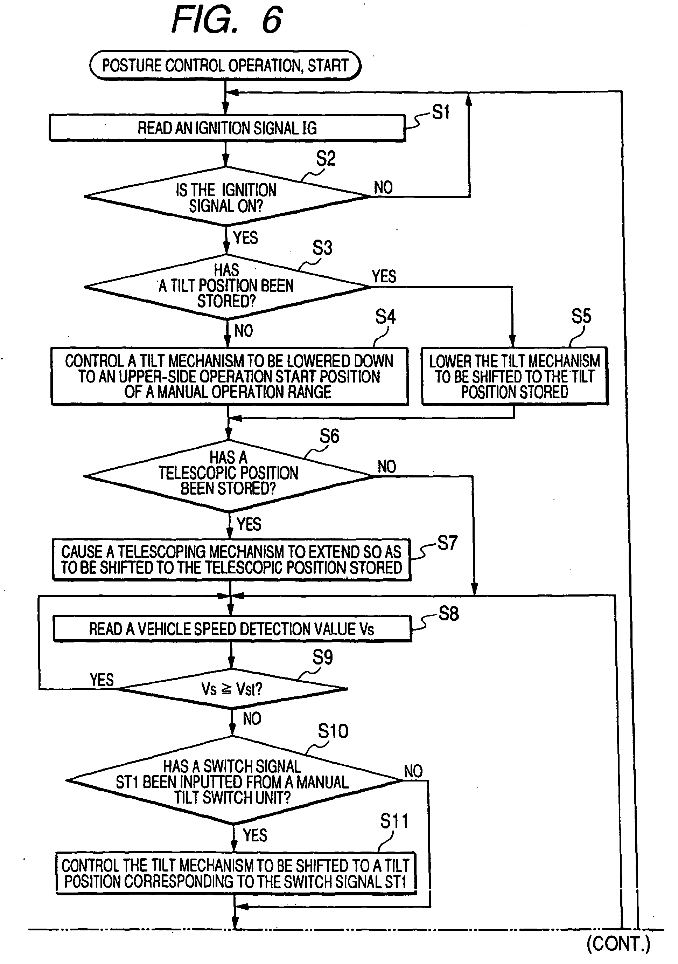

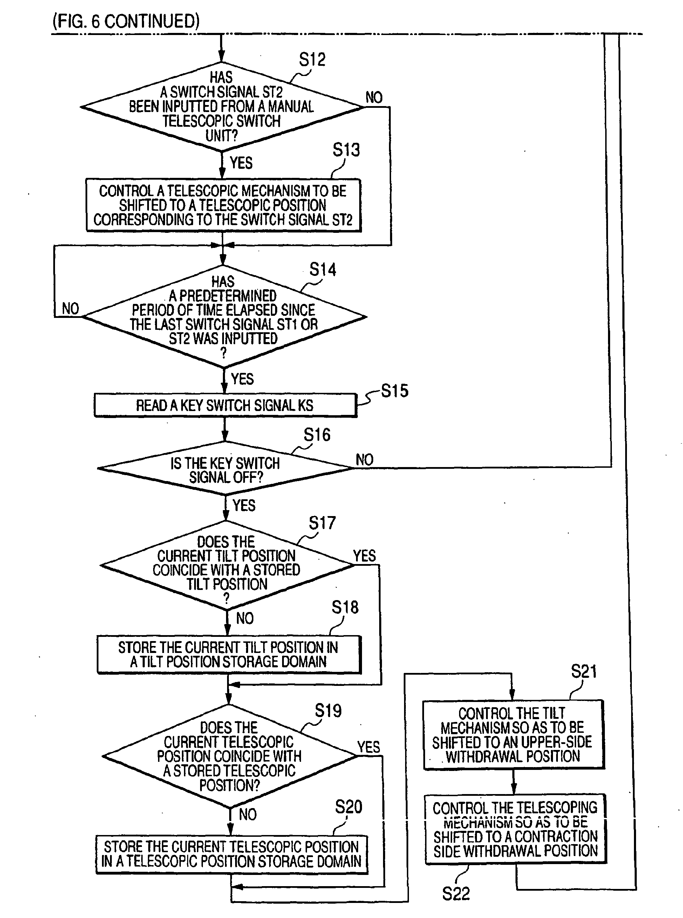

In addition, a manual telescopic operation range which can be set by operating the manual telescopic switch unit 116 is set to lie between a contraction side operation start position $P_{TEM1}$ and an extension side operation start position $P_{TES2}$ which lie to correspond, respectively, to the contraction side control start position $P_{TES1}$ and the extension side control start position $P_{TES2}$.
Additionally, in the central processor unit 106, motor control operations shown in Fig. 6 are executed, for example, when a control voltage VC is inputted thereinto from the regulator 103 or when there occurs an input into the communication interface 105 while it is at halt in a sleep state.

In this motor operation, firstly, at step S1, an ignition signal IG is read, then, proceed to step S2, where whether or not the ignition signal IG is in an on state with the engine started is determined. If the engine is not started and an ignition switch 111 is in an off state, return to the step S1, whereas if the engine is started and the ignition switch is in an on state, then proceed to step S3.

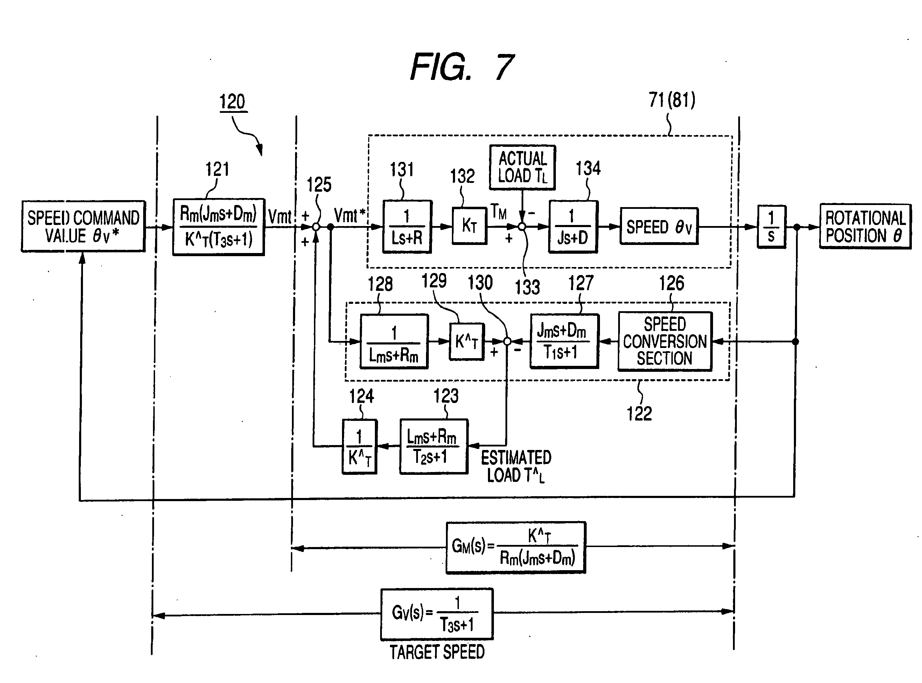

At this step S3, whether or not the tilt position is stored in the tilt position storage domain of the storage unit 107 is determined, and if it is determined that the tilt position is not so stored, proceed to step S4, where a speed command value is formed to lower the electric tile mechanism 7 from the upper-side control start position $P_{TIS1}$ which resulted when the last motor control operation was completed to the upper-side operation start position $P_{TIM1}$ of the manual operation range, so as to output the speed command value so formed to a motor control unit 120 shown in Fig. 7, and then, proceed to step S6.

In addition, if the determination at step S3 indicates that the tilt position is stored, then, proceed to step S5, where a speed command value is formed to lower the electric tile mechanism 7 from the upper-side control start position $P_{TIS1}$ which resulted when the last motor control operation was completed to the tilt position so stored, so as to output the speed command value so formed to the motor control unit 120 shown in Fig. 7, and then, proceed to step S6.

At this step S6, whether or not the telescopic position is stored in the telescopic position storage domain of the storage unit 107 is judged. If the telescopic position is stored, then, proceed to step S7, where a speed command value to extend the electric telescopic mechanism 8 from the contraction side control start position $P_{TES1}$ of the electric telescopic control range $R_{TE}$ which was set when the last motor control operation was completed to the telescopic position so stored is outputted to a telescoping motor control unit, not shown, which is similar to the motor control unit 120 shown in Fig. 7, and then, proceed to step S8. In step S6, if the telescopic position is not stored, then, proceed directly to step S8 while holding the contraction side control start position $P_{TES1}$ of the electric telescopic control range $R_{TE}$ which was set when the last motor control operation was completed.

At step S8, a vehicle speed detection value Vs detected by the vehicle speed sensor 104 is read, and then, proceed to step S9. In step S9, whether or not the vehicle speed detection value Vs is equal to or larger than a threshold value Vst at which the vehicle can be determined to be running. If Vs $\geqq$ Vst, then, return to the step S8, whereas if Vs < Vst, judging that the vehicle is in a halt state, proceed to step S10.

At this step S10, whether or not a switch signal ST1 which designates a tilt position has been inputted from the manual tilt switch unit 115 is determined, and if the switch signal ST1 is determined to have been so inputted, then, proceed to step S11. In step S11, a speed command value which controls the electric tilt mechanism 7 so that the mechanism is shifted to a tilt position corresponding to the switch signal ST1 so inputted is outputted to the motor control unit 120 shown in Fig. 7. Thereafter, proceeding to step S12, whereas if the switch signal ST1 is determined not to have been so inputted, the, proceed directly to step S12.

At this step S12, whether or not a switch signal ST2 which designates a telescopic position has been inputted from the manual telescopic switch unit 116 is determined. If the switch signal ST2 is determined to have been so inputted, then, proceed to step S13, where a command value which controls the electric telescopic mechanism 8 so that the mechanism is shifted to a telescopic position which corresponds to the switch signal ST2 so inputted is outputted to the telescoping motor control unit, not shown, which is similar to the motor control unit 120 shown in Fig. 7. Thereafter, proceeding to step S14, whereas if the switch signal ST2 is determined not to have been so inputted, then, proceed directly to step S14.

At this step S14, whether or not a predetermined time T1 has elapsed since the last switch signal ST1 or ST2 was inputted is determined. If the predetermined time T1 is determined not to have so elapsed, then, wait until the predetermined time T1 has elapsed, and then, proceed to step S15 when the predetermined time T1 has elapsed.

At step S15, a key switch signal KS, which is outputted from the key switch 113, is read. Following this, proceed to step S16, where whether or not the key switch signal KS is in an off state, that is, whether or not there exists a possibility that the driver gets out of the vehicle is determined. Whereas if the key switch signal KS is determined to have continued to be in an on state, judging that there exists almost no possibility that the driver gets out of the vehicle, return to the step S8, and when the key switch signal KS goes into the off state, then, proceed to step S17.

At this step S17, whether or not the current tilt position coincides with the tilt position stored in the tilt position storage domain of the storage unit 107 is determined, and if it is determined that both the tilt positions do not coincide with each other, then, proceed to step S18. At step S18, the current tilt position is stored in the tilt position storage domain so as to update the same domain, and thereafter, proceed to step S19, whereas if it is determined that both the tilt positions coincide with each other, then, proceed directly to step S19.

At this step S19, whether or not the current telescopic position coincides with the telescopic position stored in the telescopic position storage domain of the storage unit 107 is determined. If it is determined that both the telescopic positions do not coincide with each other, then, proceed to step S20, where the current telescopic position is stored in the telescopic position storage domain of the storage unit 107 so as to update the same domain. Thereafter, proceed to step S21, whereas if it is determined that both the telescopic positions coincide with each other, then, simply proceed to step S21.

At this step S21, a speed command value which controls the electric tilt mechanism 7 so that the mechanism is shifted to an upper-side withdrawal position when the electric tilt mechanism 7 is automatically controlled is outputted to the motor control unit 120 shown in Fig. 7. Thereafter, proceed to step S22, where a speed command value which controls the electric telescopic mechanism 8 so that the mechanism is shifted to a contraction side withdrawal position is outputted to the telescoping motor control unit, not shown, which is similar to the motor control unit 120 shown in Fig. 7, and thereafter, return to the step S1.

The series of operations shown in Fig. 6 correspond to a speed command value unit.

In addition, when speed command values are outputted during the motor control operations, the central processor unit 106 outputs the speed command values so outputted to the tilting motor control unit 120 which is shown in the block diagram of Fig. 7 and the telescoping motor control unit, not shown, which has the same configuration as that of the tilting motor control unit 120.

As is shown in Fig. 7, the tilting motor control unit 120 has a feed-forward control module 121 into which a speed command value outputted from the central processor unit 106 is inputted and which outputs a target voltage command value Vmt and

a disturbance load estimating module 122 for estimating a disturbance load based on the target voltage command value Vmt outputted from the feed-forward control module 121 and rotational position detection signals FG1 and FG2 which are outputted from the motor drive circuit 90A.

This tilting motor control unit 120 is designed to positive feed back a disturbance load estimation value $T^\wedge_L$ which is estimated by the disturbance load estimating module to an adder 125 provided on an output side of the feed-forward control module 121 through a first order lag low-pass filter 123 which is multiplied by a reciprocal number $(L_m s + R_m)$ of a transfer function of an ideal motor coil element 128 and a multiplier 124 which multiplies a reciprocal number of a torque constant $K^\wedge_T$.

Here, as is shown in Fig. 7 when represented by a block diagram, the brushless motor 71 is configured as follows. A target voltage command value Vmt* which is a value obtained by adding a filter output of the disturbance load estimation value $T^\wedge_L$ to the voltage command value Vmt outputted from the feed-forward control module 121 is inputted into a motor coil element 131 which represents the motor characteristics, an output of the motor coil element 131 is multiplied by a torque constant $K_T$ in a torque constant multiplier 132 so as to calculate a motor torque $T_M$. The motor torque $T_M$ so calculated and the intrinsic load of the electric tilt mechanism 7 or an actual load $T_L$ due to the disturbance which is actually applied to the brushless motor 71 is subtracted in a subtracter 133. Then, the subtraction result is inputted into an electric motor module 134, whereby a rotational speed $\theta_V$ is outputted from the electric motor module 134. In addition, a rotational position which is obtained by integrating a rotational speed outputted from the brushless motor 71 is detected as rotational position signals by the position detectors 91u to 91w. Here, when letting a winding resistance of the brushless motor 71 be R, a motor winding inductance be L, and a Laplace operator be s, the transfer function of the motor coil element 131 is represented by (1 / (Ls + R)), and when letting the inertia of a load system be J and the viscosity resistance be D, the transfer function of the electric motor module 134 is represented by (1 / (Js + D)).

Due to this, the disturbance load estimating module 122 has:

   a speed conversion section 126 which converts the rotational position detection signals FG1 and FG2, shifted in phase 120 degrees from each other, which are inputted from the motor drive circuit 90A into a motor speed which has a sign corresponding to the rotational direction;
   a load torque calculating section 127 which calculates a load torque by combining the motor speed obtained through conversion in the speed conversion section 126 with the inverse transfer function of the electric motor module 134 which represents a motor design value and the low-pass filter;
   an ideal motor coil element 128 into which the target voltage command value Vmt* which is obtained by adding the control output outputted from the feed-forward control module 121 to the filter output of the disturbance load estimation value which is positively fed back via the low-pass filter 123 and the multiplier 124;
   a command torque calculating section 129 which calculates a command torque value by multiplying the output of the motor coil element 128 by the torque constant $K^\wedge_T$; and
   a subtracter 130 which functions as a disturbance load estimating section which calculates a disturbance load estimation value $T^\wedge L$ which is made up of a deviation between a command torque value which is outputted from this command torque calculating section 129 and the load torque calculated in the load torque calculating section 127 which is obtained by subtracting the latter from the former.

A disturbance observer is made up of these constituent elements which calculates a disturbance load estimation value which estimates the intrinsic load to the electric tilt mechanism 7 or the disturbance load which is generated in the brushless motor.

Here, when letting a motor theoretical inertia which includes a mechanical load be $J_m$, and a theoretical viscosity resistance which includes a mechanical load be $D_m$, a transfer function $G_{LT}(s)$ of the load torque calculating section 127 becomes an inverse function of the electric motor module 134 and is set to $G(s) = (J_m s + D_m) / (T_1 s + 1)$ in which a low-pass filter of a time constant $T_1$ is combined.

In addition, when letting an ideal inductance of the electric motor 71 be $L_m$, and an ideal resistance thereof be $R_m$, a transfer function $G_{VT}(s)$ of the command voltage converting section 129 is set to $G_{VT}(s) = 1 / (L_m s + R_m)$, as with the motor coil element 131.

In this way, by positively feeding back the disturbance load estimation value $T^\wedge_L$ which is estimated in the disturbance load estimating module 122 to the adder 125 through the low-pass filter 123 and the multiplier 124, a command voltage equivalent to the disturbance load estimation value $T^\wedge_L$ so estimated can be positively fed back. Accordingly, even in case an unknown disturbance is inputted, the unknown disturbance so inputted can be suppressed in an ensured fashion.

Incidentally, in Fig. 7, when obtaining a transfer function between the voltage command value on the input side and the rotational speed on the output side of the brushless motor 71, a transfer function to be obtained is expressed:

$$G_M(s) = K\hat{}_T / \{R_m (J_m s + D_m)\} \quad \ldots \quad (1)$$

On the other hand, a transfer function which makes the target speed command value be of a time-lag of first order in order to obtain a smooth speed needs to be expressed as below, when letting the time constant be $T_3$ as is shown in Fig. 7:

$$G_V(s) = 1 / (T_3 s + 1) \quad \ldots \quad (2)$$

To make this happen, by obtaining a transfer function $G_F(s)$ in which a reciprocal number of a transfer function $G_M(s)$ of the motor which will be expressed by Equation 3 below in the feed-forward control module 121, the transfer function of the target speed expressed in Equation 2 above can be obtained.

$$G_F(s) = R_m (J_m s + D_m) / \{K\hat{}_T \times (T_3 s + 1)\} \quad \ldots \quad (3)$$

Furthermore, when calculating the speed command values $\theta_V$ for the electric tilt mechanism 7 and the electric telescopic mechanism 8 in the aforesaid motor control operations, smooth acceleration and deceleration commands can be obtained by imparting target speed commands which include those for the start of drive (acceleration) and stop of drive (deceleration) by a trigonometric function.

Namely, when letting an acceleration time which is specified from the start of acceleration to the end of acceleration be $t_A$, a time that has elapsed be t, and a constant speed in a constant speed area be $V_0$, a target speed function $\theta_{VA}(t)$ in an acceleration area will be given by the following equation (4).

$$\theta_{VA}(t) = [sin (3\pi / 2 + \pi t / t_A) + 1] V_0 / 2 \quad \ldots \quad (4)$$

In addition, in the constant speed area, the constant speed $V_0$ is set as a target speed function $\theta_{VI}(t)$ (= $V_0$), and furthermore, when a deceleration time which is specified from the start of deceleration to the end of deceleration be $t_D$, a target speed function $\theta_{VD}(t)$ will be given by the following equation (5).

$$\theta_{VD}(t) = [sin (2\pi / 2 + \pi t / t_D) + 1] V_0 / 2 \quad \ldots \quad (5)$$

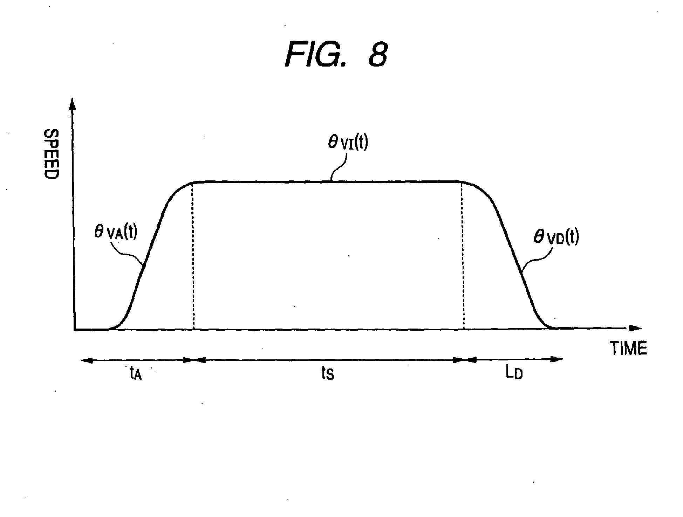

In this way, by setting the target speed functions $\theta_{VA}(t)$ and $\theta_{VD}(t)$ of acceleration and deceleration as sine-wave functions, as is shown in Fig. 8, a range from -90 degrees to 90 degrees of a sine wave is used when accelerated. In this connection, a range from 90 degrees to 270 degrees of the sine wave is used when decelerated, whereby smooth acceleration and deceleration can be attained. By restricting the acceleration time $t_A$ and deceleration time $t_D$ when acceleration and deceleration are performed, the acceleration time and deceleration time can be adjusted. These acceleration time $t_A$ and deceleration time $t_D$ may be made to be changed individually for manual control and automatic control. In addition, the start of acceleration is specified by switching on the manual title switch unit 115 or the manual telescopic switch unit 116 or by a trigger signal of the automatic tilt control or the automatic telescopic control. The start of deceleration is specified by switching off the manual tile switch unit 115 or the manual telescopic switch unit 116 or by an end signal of the automatic tilt control or the automatic telescopic control.

In particular, when stopping the electric tilt mechanism 7 and the electric telescopic mechanism 8 by decelerating them from the state where their speeds are under control, it is not that the deceleration can be attained unconditionally due to an inertia component of the column mechanism system and a friction load that has been generated from an initial stage of the operation. Then, in setting the deceleration time $t_D$, a setting time is preferably provided which is equal to or larger than an overrun resulting when a pulse width modulation signal PWM that can be obtained in advance from an actual measurement is changed momentarily from a set value to 0%.

Note that in reality, the operations in the motor control module 120 are executed through operations in the central processor unit 106.

Next, the operation of the embodiment will be described.

Let's assume that currently, the ignition switch 111 and the key switch 113 are in the off states and that the driver is not in the vehicle, and in this state, by the automatic tilt control and the automatic telescopic control which were performed when the driver last got off the vehicle, the steering shaft 3 is inclined upwards in the electric tilt mechanism 7. Then the steering wheel 2 is lying in the upper-side control start position $P_{TIS1}$ which is spaced apart upwards from the driver, while in the electric telescopic mechanism 8. Thereafter, the steering shaft 3 is contracted towards the front of the vehicle, and the steering wheel 2 is lying in the contraction side control start position $P_{TES1}$ which is located further forwards than the knees of the driver in such a manner as to be spaced apart from the driver, whereby it is assumed that a wide space is defined upwards and forwards of the driver's seat.

Because of this, in the motor control operations in Fig. 6, since the ignition signal is in the off state when it is read, the ignition switch 111 is operated to be on, and the driver waits until the ignition signal IG is put in the on state. In this state, when the driver is seated in the driver's seat to operate the ignition switch 111 to be on so that the ignition signal IG becomes on, firstly, whether or not the tilt position is stored in the storage unit 107 is determined, and if the tilt position is stored in the storage unit 107, the steering shaft 3 is lowered to the tilt position so set by the electric tilt mechanism 7. Then, the speed command value is outputted to the motor control unit so that the steering wheel 2 is positioned in the operable position by the driver.

As this occurs, since the brushless motor 71 of the electric tilt mechanism 7 starts to accelerate, when the time t that has elapsed is "0," although the target speed command value $\theta_{VA}(t)$ also becomes "0," as the time t that has elapsed increases, the target speed command value increases as is shown in Fig. 8 according to the sine wave ranging from -90 degrees to 90 degrees. Since the target speed command value $\theta_{VI}(t)$ is set to the constant speed $V_0$ when the elapsed time t reaches the acceleration time $t_A$, the brushless motor 71 is controlled to be driven at the constant speed, and when the electric tilt mechanism 7 reaches the vicinity of the tile position set, the deceleration control is started.

In this deceleration control, the target speed command value $\theta_{VD}(t)$ is calculated as a target speed command value. Since the elapsed time t is "0" at a point in time at which deceleration is started, which results in sinn/2 = 1, although the target speed command value $\theta_{VD}(t)$ becomes $V_0$, as the time t that has elapsed increases, the target speed command value decreases as shown in Fig. 8 according to the sine wave which ranges from 90 degrees to 270 degrees, and since $\sin(3\pi/2) = -1$ when the elapsed time t reaches the deceleration time $t_D$, the target speed command value $\theta_{VD}$ (t) = 0.

Because of this, the acceleration value and deceleration value of the target speed is formed into a sine-wave shape. Therefore, the brushless motor 71 can be controlled to be accelerated and decelerated smoothly. The inclinations of acceleration and deceleration when the acceleration and deceleration controls are performed can be adjusted to arbitrary inclinations by changing the time constant $T_3$ which makes up the low-pass filter of the feed-forward control module 121.

With the brushless motor 71 of the electric tilt mechanism 7 driven, the rotational direction of the motor is determined based on the rotational position detection signals FG1 and FG2 which are inputted from the motor drive circuit 90A by the disturbance observer in the disturbance estimating module 122 of the motor control unit 120. Then, a motor rotational speed to which a positive or negative sign is attached depending on the rotational direction so determined is calculated. Thereafter, the motor rotational speed so calculated is multiplied by the motor design value into which the low-pass filter is incorporated with the inverse transfer function of the electric motor module 134 in the load torque calculating section 127, whereby the load torque which includes the intrinsic torque to the electric tilt mechanism 7 and the disturbance load is calculated.

On the other hand, a command torque is calculated based on the target voltage command value Vmt* in the ideal motor coil element 128 and the command torque calculating section 129, and the load torque calculated in the load torque calculating section 127 is subtracted from the command torque calculated in the command torque calculating section 129 by the subtracter 130, so as to calculate a disturbance load estimation value $T\hat{}_L$.

Then, this disturbance load estimation value $T\hat{}_L$ is treated by the first order lag filter in the low-pass filter 123, and the disturbance load estimation value so treated is multiplied by the reciprocal number of the torque constant $K\hat{}_T$ in the multiplier 124 so as to be converted into a voltage command value, so that the voltage command value so converted is positively fed back to the adder 125 on the output side of the feed-forward control module 121. Therefore, the influence of the load $T_L$ which includes the intrinsic load to the electric tilt mechanism 7 and the disturbance load which are generated in the brushless motor 71 can be removed, thereby making it possible to secure the smooth tilt operation.

As this occurs, since the transfer function $G_F(s)$ of the feed-forward control module 121 is made to be the value which is obtained by multiplying the reciprocal number of the transfer function $G_M(s)$ (= $K\hat{}_T/\{R_m (J_m s + D_m)\}$) from the voltage command value on the input side to the motor speed on the output side of the brushless motor 71 by the low-pass filter component (1/ ($T_3 s + 1$)) which realizes the type of time-lag of first order in order to implement the smooth drive control. Therefore, after all, the transfer function $G_V(s)$ of the target speed from the input side of the feed-forward control module 121 to the output side of the brushless motor 71 becomes $(1/(T_3s + 1))$, whereby the output of the brushless motor 71 can rise smoothly according to the time constant $T_3$ relative to the target speed command value $\theta_V$.

In addition, in the event that the tilt position is not stored in the storage unit 107, in the motor control operations shown in Fig. 6, the flow proceeds from step S3 to step S4. In step S4, the electric tilt mechanism 7 is positioned further towards a seat side of the driver's seat than the upper-side operation start position $P_{TIM1}$ of the manual operation range or the withdrawal side control start position $P_{TIS1}$, and the steering column 3 is lowered to an uppermost position where the manual tilt operation is possible. In response to this, the steering wheel 2 is lowered towards the driver's side. In this case, too, in the drive control of the brushless motor 71 to lower the steering shaft 3, similar operations to those performed to shift the steering shaft 3 to the tilt position in the way described above can be performed so as to implement a smooth automatic tilt control.

When the tilt position control of the electric tilt mechanism 7 has been completed in the way described above, next, the telescopic position control is performed on the electric telescopic mechanism 8. In this telescopic position control, in the event that the telescopic position is not recorded in the storage unit 107, the brushless motor 81 of the electric telescopic mechanism 8 is not driven, and the contraction position in which the middle column 5 is left inserted within the lower column 6 is held. In the event that the telescopic position is stored in the storage unit 107, however, the flow proceeds from step S6 to step S7 in the motor control operations shown in Fig. 6, where the brushless motor 81 is controlled so that the middle column 5 is caused to extend from its contraction position to its telescopic position. In this case, too, the drive control of the brushless motor 81 is performed in totally the same way as that in which the drive control of the brushless motor 71 of the electric tilt mechanism 7 is performed. That is, the target speed control value is controlled according to the sine-wave function, and a disturbance applied to the brushless motor 81 is estimated in the disturbance estimation module. The disturbance load estimation value $T^\wedge_L$ so estimated is converted into a voltage command value via the low-pass filter and the multiplier which multiplies a reciprocal number of the torque constant $K^\wedge_T$, and the voltage command value so converted is then positively fed back to the adder on the output side of the feed-forward control module. Therefore, a smooth telescopic operation can be secured without being affected by the disturbance. In addition, the feed-forward module is set to a transfer function in which a reciprocal number of the transfer function from the voltage command value on the input side to the motor rotational speed on the output side of the brushless motor 81 is treated by the low-pass filter, whereby the brushless motor 81 can be driven and controlled to a target speed command value which realizes an output of first order lag type, thereby making it possible to realize a smooth control of the brushless motor 81.

When the automatic tilt control of the electric tilt mechanism 7 and the automatic telescopic control of the electric telescopic mechanism 8 are completed, the flow proceeds from step S7 to step S8 in the motor control operations shown in Fig. 6, and a vehicle speed detection value Vs which was detected by the vehicle speed sensor 104 is read, so as to determine whether or not the vehicle speed detection value so read is equal to or larger than a threshold value Vst at which the vehicle can be judged as being in the running state. Since Vs < Vst if the vehicle is kept in the halt state, the flow proceeds from step S9 to steps S10 to S14 to perform manual position control operations.

In the manual position control operations, when the driver operates the manual tilt switch unit 115 to input the switch signal ST1 which shifts the electric tilt mechanism 7 vertically to a desired position, in case the switch signal ST1 is, for example, a switch signal which lowers the electric tilt mechanism 7, a target speed command value $\theta_{VA}(t)$ is calculated by Equation (4) described above at a point in time at which the switch signal ST1 is put in the on state. Thereafter, when the elapsed time t has reached the acceleration time $t_A$, a target speed command value $\theta_{VI}(t)$ of a constant speed $V_0$ is calculated. Following this, a target speed command value $\theta_{VD}(t)$ is calculated by Equation (5) described above at a point in time at which the switch signal ST1 is put in the off state, and these target speed command values so calculated are then outputted to the motor control unit 120. Because of this, as with the automatic tilt control that has been described above, the brushless motor 71 is controlled for manual tilt in response to the switch signal which designates the lowering or raising of the electric tilt mechanism 7 while the switch signal ST1 continues to stay in the on state. In this case, too, as with the automatic tilt control that has been described above, since the disturbance load estimation value $T^\wedge_L$ is calculated in the disturbance estimation module 122 of the motor control unit 120, not only the brushless motor 71 can be driven and controlled without being affected by the disturbance but also the feed-forward module 21 is set to a transfer function $G_F(s)$ in which a reciprocal number of the motor transfer function $G_M(s)$ is treated by the low-pass filter. Therefore, the output of the brushless motor 71 is outputted in the way of time-lag of first order relative to the target speed command value, and a smooth speed control being thereby performed.

In addition, similarly, when the manual telescopic switch unit 116 is operated so that the switch signal ST2 which causes the middle column 5 of the electric telescopic mechanism 8 to contract or extend is inputted into the central processor unit 106, as with the electric tilt mechanism 7 that has been described above, the acceleration control is performed in response to this at a point in time at which the switch signal ST2 is put in the on state. Thereafter, the constant speed control is performed. Then, the deceleration control is performed at a point in time at which the switch signal ST2 is put in the off state. Thus, the speed of the brushless motor 81 can be controlled without being affected by the disturbance and in a smooth fashion.

Thereafter, the manual tilt control and the manual telescopic control can be performed when the vehicle is judged as being in the halt state in which the vehicle detection speed Vs is less than the threshold value Vst, as long as the key switch 113 continues to stay in the off state.

However, when the key switch 113 is put in the off state, the flow proceeds from step S16 to step S17 in the operations shown in Fig. 6, where whether or not the current tilt position coincides with the tilt position stored in the tilt position storage domain in the storage unit 107 is determined. Since the tilt position is not store, the current tilt position is stored in the tilt position storage domain (step S18).

Similarly, whether or not the current telescopic position coincides with the telescopic position stored in the telescopic position storage domain of the storage unit 107 is determined, and since the telescopic position is not stored, the current telescopic position is stored in the telescopic position storage domain (step S20).

Following this, the target speed command value to shift the electric tilt mechanism 7 upwards to the upper-side control start position $P_{TIS1}$ is outputted, and the electric tilt mechanism 7 is automatically controlled to be shifted in an opposite direction to the direction described above based on the target speed command value so outputted. Therefore, the steering wheel 2 is shifted upwards so as to be withdrawn to the upper-side control start position $P_{TIS1}$. Following this, the target speed command value to cause the electric telescopic mechanism 8 to contract is outputted, and the brushless motor 81 is automatically controlled, whereby the middle column 5 is caused to contract and the steering wheel 2 is withdrawn to the contraction side control start position $P_{TES1}$ which lies towards the front of the vehicle, a moving space for the driver being thereby defined in front of the driver, so as to facilitate the ingress and egress of the driver into and from the vehicle.

When the tilt position and the telescopic position are stored in the tilt position storage domain and the telescopic position storage domain of the storage unit 107 in the ways described above, thereafter, every time the driver gets in the vehicle and switches on the ignition switch 111, the brushless motor 71 of the electric tilt mechanism 7 and the brushless motor 81 of the electric telescopic mechanism 8 are automatically controlled so that the steering wheel 2 positions in the stored tilt position and the stored telescopic position, respectively, in the tilt position storage domain and the telescopic position storage domain of the storage unit 107.

Note that while in the embodiment, the case has been described in which the motor drive circuits 90A and 90B are incorporated in the brushless motor 71 and the brushless motor 81, respectively, the invention is not limited thereto. Hence, the invention can be applied to a case in which the motor drive circuit 90A and the motor drive circuit 90B are provided within the controller 100.

In addition, while in the embodiment, the case has been described in which the position controls of the electric tilt mechanism 7 and the electric telescopic mechanism 8 are performed in the motor control operations shown in Fig. 6 only when the vehicle is in the halt state, the invention is not limited thereto. Hence, the position controls of the electric tilt mechanism 7 and the electric telescopic mechanism 8 may be made to be implemented at an arbitrary point in time. Furthermore, a seating sensor for detecting whether or not the driver is seated in the driver's seat may be provided so that the electric tilt mechanism 7 and the electric telescopic mechanism 8 are automatically controlled to tilt and telescope from their withdrawal positions to the tilt position and the telescopic position when the seating sensor detects that the driver is seated in the driver's seat. Further, the electric tilt mechanism 7 and the electric telescopic mechanism 8 may be automatically controlled to tile and telescope to their withdrawal positions, respectively, when a switch signal SD which indicates a door open state is inputted from the door switch 114 in such a state that the seating sensor detects that the driver is seated in the drier's seat.

Furthermore, while in the embodiment, the case has been described in which the regulator 103 of the controller 100 is directly coupled to the battery 101 via the fuse 102, the invention is not limited thereto. Hence, the battery voltage $V_B$ may be made to be supplied to the regulator 103 via the key switch 113. As this occurs, a non-volatile memory may be applied to the storage unit 107 so as to store the tile position and the telescopic position.

Furthermore, while in the embodiment, the case has been described in which the invention is applied to the three-phase brushless motors 71 and 81, the invention is not limited thereto. Hence, brushless motors of four or more phases can be adopted, and in addition to this, direct-current brushless motors can also be adopted.

Furthermore, while in the embodiment, the case has been described in which both the electric tilt mechanism 7 and the electric telescopic mechanism 8 are provided as the posture adjusting mechanism, either of them may be omitted.

In addition, while in the embodiment, the case has been described in which the Schmidt trigger circuits 92u to 92w which convert position detection signals detected by the position detection elements 91u to 91w into binary signals are provided in the motor drive circuits 90A and 90B, the invention is not limited thereto. The Schmidt trigger circuits may be made to be provided on the side of the controller 100. Furthermore, the conversion circuit for conversion into a binary signal is not limited to the Schmidt trigger circuit, and hence, a comparator may be adopted which determines the positiveness or negativeness of a sine wave for binarization. In short, any method can be adopted provided that sine waves can be binarized by the method used.

Additionally, while in the embodiment, the case has been described in which the target speed command values $\theta_{VA}(t)$ and $\theta_{VD}(t)$ for acceleration and deceleration are calculated by the sine wave functions, the invention is not limited thereto. The relevant target speed command values may be calculated using cosine wave functions.

Furthermore, while in the embodiment, the case has been described in which the target speed command values $\theta_{VA}(t)$ and $\theta_{VD}(t)$ for acceleration and deceleration are calculated by the sine wave functions, the invention is not limited thereto. The calculation of the target speed command values $\theta_{VA}(t)$ and $\theta_{VD}(t)$ for acceleration and deceleration by the sine wave functions may be omitted. Even in the event that the target speed command values $\theta_{VA}(t)$ and $\theta_{VD}(t)$ are made to vary in a step-like fashion at the time of acceleration and deceleration, since the low-pass filter of $1/(T_3s + 1)$ is provided in the feed-forward module 121, the target speed command values $\theta_{VA}(t)$ and $\theta_{VD}(t)$ are integrated by the low-pass filter, whereby smooth acceleration and deceleration controls can be implemented.

In addition, while in the embodiment, the case has been described in which the transfer function of the feed-forward control module 121 is fixed, the invention is not limited thereto. Rotational speeds of the electric motors 71 and 81 may be detected, so as to determine whether or not the rotational speeds so detected have reached the target speed $V_0$ is determined. If it is determined that the rotational speeds so detected have not reached the target speed $V_0$, a fiction term $D_m$ which makes up the transfer function may be made to be adjusted through learning. As this occurs, for example, even in the event that the environment temperature changes, a relationship between acceleration information and the friction term $D_m$ when the drive is initially started after a certain period of time has elapsed is learned and by setting the friction term $D_m$ again when the target speed $V_0$ has not yet been reached, the effect of the change in environment temperature is removed, thereby making it possible to perform good acceleration and deceleration controls.

Furthermore, while in the embodiment, the case has been described in which the motor resistance R of the motor coil element 131 which represents the armature coil is fixed, the invention is not limited thereto. An observer circuit can be provided in which coil temperatures of the electric motors 71 and 81 are detected, so that the value of the resistance R can be reset according to the coil temperatures so detected. As this occurs, the motor model can be altered in such a manner as to follow changes in the coil temperatures, thereby making it possible to implement a detection of disturbance in a better way.

Furthermore, while in the embodiment, the case has been described in which the motor coil element 131 is provided which corresponds to the armature coil in the motor model of the electric motor 71 and the ideal motor coil element 128 is provided in the disturbance load estimation module 122 according to the provision of the motor coil element 131, the invention is not limited thereto. In the event that the motor coil element 131 is omitted in the motor model, the ideal motor coil element 128 in the disturbance load estimation module 122 can also be omitted.

In addition, while in the embodiment, the case has been described in which the electric telescopic control range and the manual telescopic control range are the same, the invention is not limited thereto. The manual telescopic control range may be made narrower than the electric telescopic control range. As this occurs, in the event that the telescopic position is not stored in the storage unit 107 when the motor control is started, the telescopic position is shifted to the contraction side control start position $P_{TES1}$ of the manual telescoping operation range.

In addition, while in the embodiment, the case has been described in which the rotational direction of the motor is detected by the software, the invention is not limited thereto. the rotational direction may be made to be detected by a hardware circuit configuration in which a differentiating circuit, a comparison circuit and the like are combined together.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

**Claims**

1. An electric steering apparatus comprising:

> a steering mechanism (4, 5, 6) comprising a steering wheel (2);
> a posture adjusting mechanism (7, 8) having an electric motor (71, 81) for adjusting at least either of a tilt position and a telescopic position of the steering mechanism (4, 5, 6);
> a speed command unit (106) which outputs a speed command (PWM) for position adjustment by the posture adjusting mechanism (7, 8);
> a motor control unit (120) having a feed-forward control module (121) in which a transfer function for obtaining a target speed based on the speed command (PWM) outputted from the speed command unit (106)is set for controlling the electric motor (71, 81); and
> a disturbance load estimation unit (122) which estimates a disturbance load;
> **characterized in**
> **that** said disturbance load estimation unit (122) is designed to estimate the disturbance load from a deviation between a load torque based on speed information of the electric motor (71, 81) and a command torque based on the speed command (PWM) when the electric motor (71, 81) is controlled by the motor control unit (120), wherein

a command value equivalent to a disturbance load estimation value ($T\hat{}_L$) estimated by the disturbance load estimation unit (122) is positively fed back to an output side of the feed-forward control module (121), and

the transfer function of the feed-forward control module (121) is set to a transfer function with which a target speed is obtained.

2. The electric steering apparatus as set forth in Claim 1, **characterized in that** the disturbance load estimation unit (122) is made up of an disturbance observer comprising:

a command torque calculation module (129) which calculates a command torque by multiplying a command value outputted from the feed-forward control module (121) by a torque constant ($K\hat{}_T$);

a load torque calculation module (127) which calculates the load torque by multiplying a speed of the electric motor (71, 81) by a motor inverse transfer function; and

a disturbance load estimation module (122) which estimates the disturbance load by calculating a deviation between the command torque outputted from the command torque calculation module (129) and the load torque calculated by the load torque calculation module (127).

3. The electric steering apparatus as set forth in Claim 1, **characterized in that** when outputting an acceleration or deceleration speed command, the speed command unit (106) is made to calculate the speed command by multiplying a predetermined constant speed command value by a trigonometric function which takes an acceleration or deceleration time into consideration.

**Patentansprüche**

1. Elektrische Lenkvorrichtung umfassend:

eine Lenkanlage (4, 5, 6) umfassend ein Lenkrad (2);

eine Positureinstelleinrichtung (7, 8) aufweisend einen elektrischen Motor (71, 81) zum Einstellen wenigstens entweder einer Neigeposition oder eine Teleskopposition der Lenkanlage (4, 5, 6);

eine Geschwindigkeitssteuereinheit (106), welche einen Geschwindigkeitssteuerbefehl (PWM) zur Positionseinstellung durch die Positureinstelleinrichtung (7, 8) ausgibt;

eine Motorsteuereinheit (120) aufweisend ein Optimalwertsteuerungsmodul (121), mit welchem eine Übertragungsfunktion zum Erreichen einer Zielgeschwindigkeit, die auf dem von der Geschwindigkeitssteuereinheit (106) ausgegebenen Geschwindigkeitssteuerbefehl (PWM) basiert, zum Steuern des elektrischen Motors (71, 81) festgelegt ist; und

eine Störungslast-Bestimmungseinheit (122), welche eine Störungslast bestimmt;

**dadurch gekennzeichnet,**

**dass** die Störungslast-Bestimmungseinheit (122) vorgesehen ist, die Störungslast aus einer Abweichung zwischen einem Lastmoment, welches auf einer Geschwindigkeitsinformation des elektrischen Motors (71, 81) basiert, und einem Momentensteuerbefehl, welches auf dem Geschwindigkeitssteuerbefehl (PWM) basiert, zu bestimmen, wenn der elektrische Motor (71, 81) durch die Motorsteuereinheit (120) gesteuert wird, wobei ein Steuerbefehlswert, der äquivalent zu einem Störungslast-Bestimmungswert ($T\hat{}_L$) ist, der durch die Störungslast-Bestimmungseinheit (122) bestimmt wurde, als positiver Wert an eine Ausgabeseite des Optimalwertsteuerungsmoduls (121) zugeführt wird, und

die Übertragungsfunktion des Optimalwertsteuerungsmoduls (121) auf eine Übertragungsfunktion festgelegt ist, mit welcher eine Zielgeschwindigkeit erreicht wird.

2. Elektrische Lenkvorrichtung nach Anspruch 1, **dadurch gekennzeichnet, dass** die Störungslast-Bestimmungseinheit (122) sich aus einem Störgrößenbeobachter zusammensetzt, der umfasst:

ein Momentensteuerbefehl-Berechnungsmodul (129), welches einen Momentensteuerbefehl durch Multiplizieren eines Steuerbefehlwertes ausgegeben von dem Optimalwertsteuerungsmodul (121) mit einer Momentenkonstante ($K\hat{}_T$) berechnet;

eine Lastmoment-Berechnungseinheit (127), welche das Lastmoment durch Multiplizieren einer Geschwindigkeit des elektrischen Motors (71, 81) mit einer Motorumkehr-Übertragungsfunktion berechnet; und

ein Störungslast-Bestimmungsmodul (122), welches die Störungslast durch Berechnung einer Abweichung zwischen dem Momentensteuerbefehl ausgegeben von dem Momentensteuerbefehl-Berechnungsmodul (129) und dem Lastmoment berechnet durch die Lastmoment-Berechnungseinheit (127) bestimmt.

3. Elektrische Lenkvorrichtung nach Anspruch 1, **dadurch gekennzeichnet, dass,** wenn ein Geschwindigkeitszunahme- oder ein Geschwindigkeitsabnahme-Steuerbefehl ausgegeben wird, die Geschwindigkeitssteuereinheit (106) den Geschwindigkeitssteuerbefehl durch Multiplizieren eines vorbestimmten konstanten Geschwindigkeitssteuerbefehlwertes mit einer trigonometrischen Funktion, die eine Zunahme- oder Abnahmezeit berücksichtigt, berechnet.

**Revendications**

1. Appareil à direction électrique, comprenant :

un mécanisme de direction (4, 5, 6) comprenant un volant de direction (2);
un mécanisme d'ajustement de posture (7, 8) ayant un moteur électrique (71, 81) pour ajuster au moins l'une ou l'autre d'une position de basculement et une position télescopique du mécanisme de direction (4, 5, 6) ;
une unité d'ordre commande de vitesse (106) qui délivre un ordre de vitesse (PWM) pour l'ajustement de position par le mécanisme d'ajustement de posture (7, 8) ;
une unité de commande de moteur (120) ayant un module de commande avec précompensation (121) dans lequel une fonction de transfert pour obtenir une vitesse cible en se basant sur l'ordre de vitesse (PWM) délivré par l'unité d'ordre de vitesse (106) est fixée pour commander le moteur électrique (71, 81) ; et
une unité d'estimation de charge de perturbation (122) qui estime une charge de perturbation ;
**caractérisé en ce que**
ladite unité d'estimation de charge de perturbation (122) est conçue pour estimer la charge de perturbation résultant d'une déviation entre un couple de charge basé sur des informations de vitesse du moteur électrique (71, 81) et un couple d'ordre basé sur la commande de vitesse (PWM) quand le moteur électrique (71, 81) est commandé par l'unité de commande de moteur (120), et
une valeur d'ordre équivalente à une valeur d'estimation de charge de perturbation ($T^{\wedge}_L$) estimée par l'unité d'estimation de charge de perturbation (122) est utilisée positivement comme rétroaction sur un côté sortie du module de commande avec précompensation (121), et
la fonction de transfert du module de commande avec précompensation (121) est fixée à une fonction de transfert avec laquelle une vitesse cible est obtenue.

2. Appareil à direction électrique selon la revendication 1, **caractérisé en ce que** l'unité d'estimation de charge de perturbation (122) est constituée d'un dispositif d'observation de perturbation comprenant :

un module de calcul de couple d'ordre (129) qui calcule un couple d'ordre en multipliant une valeur d'ordre délivrée par le module de commande avec précompensation (121) par une constante de couple ($K^{\wedge}_T$) ;
un module de calcul de couple de charge (127) qui calcule le couple de charge en multipliant une vitesse du moteur électrique (71, 81) par une fonction de transfert inverse du moteur ; et
un module d'estimation de charge de perturbation (122) qui estime la charge de perturbation en calculant une déviation entre le couple d'ordre délivré par le module de calcul de couple d'ordre (129) et le couple de charge calculé par le module de calcul de couple de charge (127).

3. Appareil à direction électrique selon la revendication 1, **caractérisé en ce que,** lorsqu'elle délivre un ordre de vitesse d'accélération ou de décélération, l'unité d'ordre de vitesse (106) est amenée à calculer l'ordre de vitesse en multipliant une valeur d'ordre de vitesse constante prédéterminée par une fonction trigonométrique qui prend en considération un temps d'accélération ou de décélération.

# FIG. 1

FIG. 2

CONTROLLER
100

EP 1 927 526 B1

# FIG. 3

## FIG. 4

ORIGIN
POSITION

$R_{MAX}$

$R_{TI}$

TILT UP

TILT DOWN

MECHANICAL FULL STROKE AMOUNT

$P_{TIS1}$

ELECTRIC TILT CONTROL RANGE (RANGE WHERE AUTOMATIC
MOVING AWAY AND AUTOMATIC RETURN CAN BE IMPLEMENTED)

$P_{TIS2}$

$P_{MU}$

$P_{MD}$

$P_{TIM1}$

MANUAL OPERATION RANGE (MSW MOVABLE RANGE)

$P_{TIM2}$

$L_M$

$L_U$

← CLOCKWISE
ROTATION (CW)

COUNTERCLOCKWISE →
ROTATION (CCW)

EP 1 927 526 B1

# FIG. 5

ORIGIN POSITION

$R_{MAX}$

$R_{TE}$

TELESCOPED TO BE SHORT

TELESCOPED TO BE LONG

MECHANICAL FULL STROKE AMOUNT

$P_{MS}$

$P_{TES1}$

ELECTRIC TELESCOPIC CONTROL RANGE (RANGE WHERE AUTOMATIC MOVING AWAY AND AUTOMATIC RETURN CAN BE IMPLEMENTED)

$P_{TES2}$

$P_{ML}$

$P_{TEM1}$

MANUAL OPERATION RANGE (MSW MOVABLE RANGE)

$P_{TEM2}$

$L_S$

← CLOCKWISE ROTATION (CW)

COUNTERCLOCKWISE → ROTATION (CCW)

EP 1 927 526 B1

# FIG. 6

```
( POSTURE CONTROL OPERATION, START )
                    │
                    ▼
┌──────────────────────────────────────────┐  S1
│        READ AN IGNITION SIGNAL IG        │
└──────────────────────────────────────────┘
                    │
                    ▼
          ╱─────────────────╲   S2
         ╱   IS THE IGNITION  ╲    NO
         ╲    SIGNAL ON?      ╱ ────────►
          ╲─────────────────╱
                    │ YES
                    ▼
          ╱─────────────────╲   S3
         ╱       HAS          ╲    YES
         ╱  A TILT POSITION BEEN ╲ ────────►
         ╲      STORED?        ╱
          ╲─────────────────╱
                    │ NO
                    ▼
┌──────────────────────────────────────────┐  S4        ┌──────────────────────────┐  S5
│ CONTROL A TILT MECHANISM TO BE LOWERED DOWN│           │ LOWER THE TILT MECHANISM │
│ TO AN UPPER-SIDE OPERATION START POSITION │           │  TO BE SHIFTED TO THE TILT│
│        OF A MANUAL OPERATION RANGE        │           │      POSITION STORED     │
└──────────────────────────────────────────┘            └──────────────────────────┘
                    │
                    ▼
          ╱─────────────────╲   S6
         ╱       HAS A        ╲    NO
         ╱  TELESCOPIC POSITION ╲ ────────►
         ╲     BEEN STORED?     ╱
          ╲─────────────────╱
                    │ YES
                    ▼
┌──────────────────────────────────────────┐  S7
│ CAUSE A TELESCOPING MECHANISM TO EXTEND SO AS│
│ TO BE SHIFTED TO THE TELESCOPIC POSITION STORED│
└──────────────────────────────────────────┘
                    │
                    ▼
┌──────────────────────────────────────────┐  S8
│      READ A VEHICLE SPEED DETECTION VALUE Vs │
└──────────────────────────────────────────┘
                    │
                    ▼
     YES   ╱─────────────────╲   S9
   ◄────── ╲     Vs ≥ Vst?    ╱
           ╲─────────────────╱
                    │ NO
                    ▼
          ╱─────────────────╲   S10
         ╱  HAS A SWITCH SIGNAL ╲    NO
         ╱ ST1 BEEN INPUTTED FROM A MANUAL ╲ ────────►
         ╲    TILT SWITCH UNIT?  ╱
          ╲─────────────────╱
                    │ YES
                    ▼
┌──────────────────────────────────────────┐  S11
│ CONTROL THE TILT MECHANISM TO BE SHIFTED TO A TILT│
│ POSITION CORRESPONDING TO THE SWITCH SIGNAL ST1│
└──────────────────────────────────────────┘
                    │
                    ▼
```

(CONT.)

(FIG. 6 CONTINUED)

```
                        ╱╲  S12
                       ╱  ╲
                      ╱ HAS ╲
           ╱────────────────────────╲
          ╱    A SWITCH SIGNAL ST2    ╲  NO
         ╱ BEEN INPUTTED FROM A MANUAL  ╲──────────┐
          ╲    TELESCOPIC SWITCH       ╱           │
           ╲        UNIT?             ╱            │
            ╲                        ╱             │
             ╲                      ╱              │
               │ YES     S13                       │
               ▼                                    │
    ┌─────────────────────────────────────┐         │
    │ CONTROL A TELESCOPIC MECHANISM TO BE │         │
    │  SHIFTED TO A TELESCOPIC POSITION    │         │
    │ CORRESPONDING TO THE SWITCH SIGNAL ST2│        │
    └─────────────────────────────────────┘         │
```

S12 HAS A SWITCH SIGNAL ST2 BEEN INPUTTED FROM A MANUAL TELESCOPIC SWITCH UNIT? — NO / YES

S13 CONTROL A TELESCOPIC MECHANISM TO BE SHIFTED TO A TELESCOPIC POSITION CORRESPONDING TO THE SWITCH SIGNAL ST2

S14 HAS A PREDETERMINED PERIOD OF TIME ELAPSED SINCE THE LAST SWITCH SIGNAL ST1 OR ST2 WAS INPUTTED? — NO / YES

S15 READ A KEY SWITCH SIGNAL KS

S16 IS THE KEY SWITCH SIGNAL OFF? — NO / YES

S17 DOES THE CURRENT TILT POSITION COINCIDE WITH A STORED TILT POSITION? — YES / NO

S18 STORE THE CURRENT TILT POSITION IN A TILT POSITION STORAGE DOMAIN

S19 DOES THE CURRENT TELESCOPIC POSITION COINCIDE WITH A STORED TELESCOPIC POSITION? — YES / NO

S20 STORE THE CURRENT TELESCOPIC POSITION IN A TELESCOPIC POSITION STORAGE DOMAIN

S21 CONTROL THE TILT MECHANISM SO AS TO BE SHIFTED TO AN UPPER-SIDE WITHDRAWAL POSITION

S22 CONTROL THE TELESCOPING MECHANISM SO AS TO BE SHIFTED TO A CONTRACTION SIDE WITHDRAWAL POSITION

# FIG. 7

$$G_M(s) = \frac{K^{\wedge}_T}{R_m(J_m s + D_m)}$$

$$G_V(s) = \frac{1}{T_3 s + 1}$$

TARGET SPEED

EP 1 927 526 B1

# FIG. 8

**EP 1 927 526 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11070880 A

- JP 2000289626 A